Europäisches Patentamt

European Patent Office

Office européen des brevets

(11) Veröffentlichungsnummer: **0 670 356 A2**

(12) **EUROPÄISCHE PATENTANMELDUNG**

(21) Anmeldenummer: **95102628.5**

(22) Anmeldetag: **24.02.95**

(51) Int. Cl.6: **C09J 7/00**, C08F 2/02, C09D 4/06

(30) Priorität: **03.03.94 DE 4406977**

(43) Veröffentlichungstag der Anmeldung:
**06.09.95 Patentblatt 95/36**

(84) Benannte Vertragsstaaten:
**AT BE CH DE DK ES FR GB GR IE IT LI LU NL PT SE**

(71) Anmelder: **Lohmann GmbH & Co. KG**
**Irlicher Strasse 55**
**D-56567 Neuwied (DE)**

(72) Erfinder: **Blum, Walter**
**Kurtriererstrasse 2**
**D-56567 Neuwied (DE)**
Erfinder: **Czech, Zbigniew, Dr.**
**Rostocker Strasse 10**
**D-56075 Koblenz (DE)**

(74) Vertreter: **Flaccus, Rolf-Dieter, Dr.**
**Patentanwalt**
**Sperlingsweg 32**
**D-50389 Wesseling (DE)**

(54) **Verfahren zur Herstellung von Haftklebeschichten, insbesondere von dicken Haftklebeschichten für die Herstellung von selbstklebenden Hochleistungsklebstoffartikeln.**

(57) Ein Verfahren zur Herstellung von Haftkleberschichten, insbesondere von dicken Haftkleberschichten für selbstklebende Hochleistungsklebstoffartikel ist dadurch gekennzeichnet, daß in einem Arbeitsschritt ein Gemisch von Ausgangsmonomeren, polymerisationsfähigem Fotoinitiator und Radikalbildner im Extruder kontinuierlich zu einem Prepolymerisat umgesetzt und daß in einem zweiten Arbeitsschritt, das im Extruder hergestellte Prepolymerisat auf einen dehäsiv ausgerüsteten Träger aufgebracht und mittels UV-Bestrahlung zum fertigen Produkt durchpolymerisiert wird.

EP 0 670 356 A2

Die Erfindung betrifft ein Verfahren zur Herstellung von Haftklebeschichten, insbesondere von dicken Haftklebeschichten für die Herstellung von selbstklebenden Hochleistungsklebstoffartikeln.

Es ist bekannt, daß konventionelle Beschichtungsmethoden zur Herstellung von druckempfindlichen Haftklebeschichten mit einer Dicke oberhalb 0,2 mm, besonders aber oberhalb 0,6 mm, auf Schwierigkeiten stoßen. So bilden sich bei der Trocknung von lösemittelhaltigen, dicken Haftklebemassen Blasen, wodurch Eigenschaften der Haftklebeschicht, wie Tack, Klebkraft, Scherfestigkeit oder das optische Aussehen stark beeinträchtigt werden. Deshalb mußte mit Erhöhung der aufzutragenden Klebstoffmenge die Beschichtungsgeschwindigkeit reduziert werden, was die so hergestellten Produkte unrentabel macht.

Die DE-OS 40 16 808 und DE-OS 40 18 248 beschreiben Verfahren zur Herstellung von mehrschichtigen Haftklebefilmen bzw. doppelseitigen Haftklebebändern, wobei dicke Haftklebeschichten durch mehrfaches Auftragen einzelner Schichten hergestellt werden. So erhaltene Produkte sind aber entweder infolge unwirtschaftlicher Beschichtungsgeschwindigkeiten zu teuer, oder sie weisen zu geringe Scherfestigkeit und unakzeptable Spaltfestigkeit auf.

Die CA-PS 747 341 beschreibt druckempfindliche Klebestreifen, bei welchen eine dicke Haftklebeschicht durch Beschichtung, eines Schaumstoffträgers erhalten wird. Dabei ergeben sich eine Reihe von Problemen wie beispielsweise ungenügende Weichmacherbeständigkeit und Anpassungsschwierigkeiten bei der Verklebung von Materialien mit unebenen Oberflächen.

Die US-PS 3 314 838 beschreibt die Verwendung von Glasmikrohohlkugeln zur Einstellung der Dicke einer Haftklebeschicht. Derartige Haftklebebänder sind aber gegen Druck empfindlich, weil die Glasmikrohohlkugeln schon bei geringer Krafteinwirkung platzen. Das entsprechende Herstellungsverfahren ist zudem kostenträchtig.

Aus der DE-PS 28 21 606 sind druckempfindliche Klebestreifen mit dicken Haftklebeschichten bekannt, die UV-durchlässige druckresistente Glasmikrohohlkugeln enthalten. Diese Haftklebeschichten weisen ebenfalls den Nachteil der mangelhaften inneren Festigkeit auf und sind zu teuer in der Herstellung.

Aus Patentanmeldungen der Fa. 3M ist bekannt, den Herstellungsprozeß von dicken Haftklebeschichten durch eine UV-Polymerisation auf einem Träger durchzuführen. Bei der Durchführung des Verfahrens wird ein Monomerengemisch mittels UV-Strahlen teilweise vorpolymerisiert und dadurch viskos eingestellt. Die Mischung aus dem so erhaltenen Polymerisat und den noch vorhandenen Ausgangsmonomeren wird sodann in einer definierten Schichtstärke auf eine dehäsive Folie aufgetragen und mittels UV-Strahlen zum fertigen Produkt durchpolymerisiert. Nachteile dieses Verfahrens liegen dann, daß das mittels UV-Strahlen hergestellte, als Verdicker fungierende Vorpolymerisat während der weiter durchgeführten UV-Polymerisation nicht völlig in die Polymerkette inkorporiert wird. Dieser Nachteil führt dazu, daß die auf diesem Wege hergestellte Haftklebeschicht Materialanteile enthält, welche ihre Kohäsion sowie die chemische Resistenz negativ beeinflussen.

Die DE-PS 39 35 097 beschreibt ein Verfahren zur Herstellung von dicken Haftklebeschichten, bei dem das zur UV-Polymerisation gebrachte Monomerengemisch mit einem lösemittelfreien carboxylgruppenhaltigen Polymerisat verdickt wird. Der Nachteil dieses Verfahrens liegt darin, daß das eingesetzte carboxylgruppenhaltige Polymerisat UV-inaktiv ist und ebenfalls nicht völlig in die Polymerkette inkorporiert wird. Es fungiert als interner Weichmacher, der die Eigenschaften der fertigen Haftklebeschicht negativ beeinflußt.

Die Patentanmeldung P 43 03 183 beschreibt ein Verfahren zur Herstellung, von dicken Haftklebeschichten, bei dem die Verdickung des mittels UV-Strahlen zu polymerisierenden Ausgangsmonomerengemisches mit einem lösemittelfreien, gesättigten fotopolymerisationsfähigen Polymerisat erfolgt. Aufgrund der gleichzeitig verlaufenden Polymerisations- und Vernetzungsreaktionen wird das eingesetzte, gesättigte UV-reaktive Polymerisat vollständig in die Polymerkette inkorporiert und bildet damit einen festen Bestandteil der auf dem Wege hergestellten Haftklebeschichten, die sich durch gute thermische Belastbarkeit, erhöhte Kohäsion und weitgehende Resistenz gegen Weichmacher auszeichnen. Der Nachteil dieses Verfahrens liegt allerdings darin, daß die dicken Haftklebeschichten äußerst unangenehm nach den photolytischen Abbauprodukten des Fotoinitiators riechen und daß die spezifische Haftung, der dicken Haftklebeschichten wegen einer eingeschränkten Auswahl an fotopolymerisationsfähigen Polymerisaten kaum variationsfähig ist.

Aufgabe der vorliegenden Erfindung ist es deshalb, ein Verfahren zur Herstellung von dicken Haftklebeschichten zu konzipieren, die die erwähnten Nachteile nicht mehr aufweisen und sich durch ausgezeichnete spezifische Haftung an unterschiedlichen Substraten auszeichnen.

Die Aufgabe wird erfindungsgemäß durch ein Verfahren in zwei Stufen gelöst, bei dem in erster Stufe das Ausgangsmonomerengemisch mit polymerisationsfähigem Fotoinitiator und Radikalbildner im Extruder kontinuierlich zu einem Prepolymerisat umgesetzt wird und in zweiter Stufe das im Extruder hergestellte Prepolymerisat auf einen dehäsiven Träger aufgebracht und einer UV-Bestrahlung ausgesetzt wird. Die nach dem Verfahren hergestellten Haftklebeschichten charakterisieren sich durch gute thermische Resi-

2

stenz, chemische Beständigkeit, exzellente mechanische Eigenschaften und hervorragende Adhäsion zu zahlreichen Substraten.

Das erfindungsgemäße Verfahren wird im Vergleich mit anderen Verfahren gemäß DE-PS 39 35 097 und gemäß Patentanmeldung P 43 03 183 graphisch dargestellt.

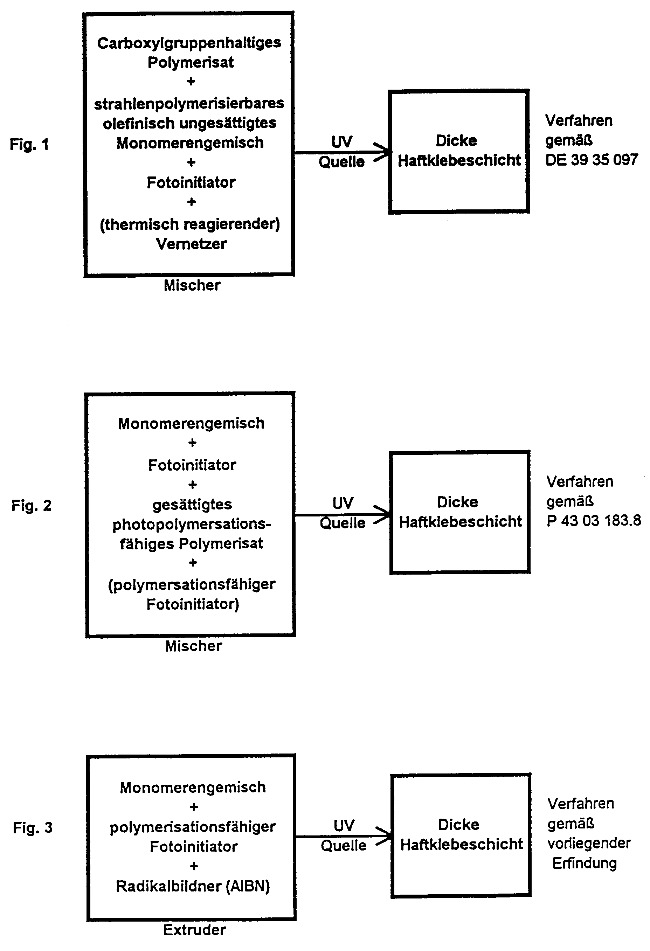

Fig. 1 stellt ein Fließschema zur Herstellung von dicken Haftklebeschichten dar, bei dem ein strahlenpolymerisierbares, olefinisch ungesättigtes Monomerengemisch mit einem Fotoinitiator und zwecks Verdikkung mit einem carboxylgruppenhaltigen Polymerisat abgemischt wird. Die streichfähige Zubereitung wird auf einen dehäsiven Träger aufgetragen und UV-Strahlung ausgesetzt. Zwecks Verbesserung der Kohäsion und thermischen Resistenz kann der Zubereitung ein thermisch reagierender Vernetzer zugesetzt werden.

Fig. 2 stellt ein Fließschema zur Herstellung von dicken Haftklebeschichten dar, bei dem ein mit einem Fotoinitiator abgemischtes Monomerengemisch mit einem gesättigten photopolymerisationsfähigen Polymerisat verdickt wird. Die streichfähige Zubereitung wird ebenfalls auf einen dehäsiven Träger aufgebracht und UV-Strahlung ausgesetzt. Um die Kohäsion und die thermische Resistenz der dicken Haftklebeschicht zu steigern, kann der Zubereitung ein polymerisationsfähiger Fotoinitiator zugesetzt werden. Eine Zugabe von thermisch reagierendem Vernetzer ist bei diesem Verfahren nicht notwendig.

Fig. 3 stellt das Fließschema zur Herstellung von dicken Haftklebeschichten dar, bei dem im ersten Schritt ein Monomerengemisch mit polymerisationsfähigem Fotoinitiator und Radikalbildner radikalisch im Extruder zu einem streichfähigen Prepolymerisat polymerisiert wird. Das streichfähige Prepolymerisat wird im zweiten Schritt auf einen dehäsiven Träger aufgebracht und UV-Strahlung ausgesetzt.

Das erfindungsgemäße Verfahren (Fig. 3) unterscheidet sich folgendermaßen von den anderen schematisch dargestellten Verfahren (Fig. 1 und Fig. 2):

- Der radikalische Polymerisationsprozeß im Extruder läßt sich so steuern, daß das im Extruder hergestellte Prepolymerisat einen Umwandlungsgrad von mindestens 85% aufweist. Das Prepolymerisat enthält damit maximal 15% an freien Monomeren, die unter einer UV-Quelle umgesetzt werden. Bei anderen Verfahren (Fig. 1 und Fig. 2) ist der Anteil an freien Monomeren wesentlich höher, da das carboxylgruppenhaltige Polymerisat (Fig. 1) oder das gesättigte photopolymerisationsfähige Polymerisat (Fig. 2) die Funktion der Verdicker erfüllt. Die UV-Polymerisation auf dem dehäsiven Träger ist bei den Verfahren nach Fig. 1 und Fig. 2 durch den notwendigen Umfang der UV-Quellen wesentlich benachteiligt.

- Das Verfahren gemäß Fig. 3 verläuft in Bezug auf die UV-Polymerisation im Vergleich zu anderen Verfahren, bei denen die erhebliche Polymerisationswärme durch z.B. spezielle Bahnkonstruktion abgeführt werden muß, nur leicht exotherm.

- Der Gesamtumsatz bei den nach Verfahren gemäß Fig. 3 hergestellten dicken Haftklebeschichten, ist hoch und beträgt mindestens 98,5%. Bei dicken Haftklebeschichten, die nach Verfahren gemäß Fig. 1 und Fig. 2 hergestellt sind, liegt der Gesamtumsatz mit 90-95% deutlich niedriger.

Erste Untersuchungen, einen Extruder als chemischen Reaktor für die Polymerisation zu nutzen, reichen ca. 50 Jahre zurück.

Den Stand der Technik auf dem Sektor der Extrusionspolymerisation spiegelt beispielsweise die Patentanmeldung DE 33 05 727 (Nitto) wider, die ein kontinuierliches Verfahren zur radikalischen Polymerisation von Acrylmonomeren im Ein-oder Zweischneckenextruder offenbart. Durch eine entsprechende Schneckengeometrie und Einstellung der Temperatur der einzelnen Zonen des Extruders wird ein Umwandlungsgrad zwischen 93% und 95% erreicht. Das Verfahren umfaßt aber keine Haftklebemasse, die Glasübergangstemperatur (Tg) des Extrusionspolymerisates liegt bei ca. +29 °C.

Im Hinblick auf den Umwandlungsgrad sind 5-7% Restmonomere in einem Haftkleberpolymerisat unakzeptabel. Die Restmonomeren verschlechtern die mechanischen Eigenschaften, wandern an die Oberfläche und verursachen einen unangenehmen Geruch des Fertigproduktes. Eine Nachbehandlung mittels UV-Strahlen kann hier keine Verbesserung des Umwandlungsgrades bewirken, da photoaktive Zentren im Extrusionspolymerisat fehlen.

Auch eine UV-Polymerisation des verdickten oder reinen Ausgangsmonomerengemisches garantiert keinen hohen (>98%) Umsetzungsgrad.

Der erste Schritt der vorliegenden Erfindung erfolgt in einem Extruder, wo ein Gemisch von Ausgangsmonomeren mit einem polymerisationsfähigen Fotoinitiator und Radikalbildner kontinuierlich zu einer Haftklebemasse polymerisiert wird. Für diesen Vorgang sind beispielsweise Doppelschneckenextruder bestens geeignet. Sie können mit einzeln beheizbaren Zonen ausgerüstet sein, und falls notwendig, mit Entgasungszonen. Die Drehzahl der Schnecken läßt sich in einem großen Bereich stufenlos variieren.

Als Polymere für Haftklebemassen sind beispielsweise Polyacrylate, Polyester, Polyisobutene, Polyvinylether, Polyurethane oder Silikone geeignet. Besonders bevorzugt sind Polyacrylate, die sich durch ausgezeichnete Klebrigkeit, mechanische Eigenschaften, thermische Resistenz und Alterungsbeständigkeit auszeichnen.

Das Monomerengemisch kann Acrylsäure und/oder Acrylsäurederivate enthalten, die aufgrund der Polymerisationsfähigkeit mit Acrylsäure für die Herstellung von Haftklebemassen mit relativ niedrig (<-20 °C) liegender Glasübergangstemperatur (Tg) geeignet sind.

Das Kriterium der Glasübergangstemperatur ist zur Charakterisierung von Homo- oder Copolymeren bekannt. Diese Temperatur, bei der Segmente der Polymerkette beweglich werden, kann durch thermodynamische Messungen wie Differentialthermoanalyse, Wärmekapazität, Dilatometrie oder durch mechanische Messungen wie beispielsweise das Torsionspendel bestimmt werden.

Acrylsäurederivate, die sich beispielsweise als Monomere für die Herstellung von Haftklebemassen eignen, umfassen die Alkylester der Acrylsäure mit nicht-tertiären Alkoholen wie Ethanol, Propanol, Butanol, Isobutanol, Pentanol, Hexanol, Heptanol, Octanol, Isooctanol, 2-Methylheptanol, 2-Ethylhexanol, Nonanol und Isononanol.

Als besonders geeignet für eine im Extruder durchgeführte radikalische Polymerisation erwies sich 2-Ethylhexylacrylat, da es im Vergleich mit anderen Acrylaten wie Butyl- oder Octylacrylat bei gleichen Bedingungen stärker zur Copolymerisation mit Acrylsäure (höherer Umwandlungsgrad) neigt.

Als geeignete thermische Radikalbildner, die für die Polymerisation im Extruder eingesetzt werden können, gehören Azo-Verbindungen wie beispielsweise 2,2'-Azobisisobutyronitril (AIBN), Peroxide wie etwa Benzylperoxid, Cyclohexanonperoxid oder Hydroperoxide wie z.B. tert-Butylhydroperoxid. Als besonders geeignet erwies sich AIBN.

Um in die Polymerkette UV-reaktive radikalisch reagierende Stellen einzubauen, wird das AIBN-haltige Monomerengemisch mit einem polymerisationsfähigen Fotoinitiator abgemischt und im Extruder zu einem Prepolymer polymerisiert. Der polymerisationsfähige Fotoinitiator wird als eine doppelbindungshaltiges Monomer in die Hauptpolymerkette inkorporiert und durch die Seitenkette (photoaktives Bestandteil des Fotoinitiators) bildet er Radikal- und Vernetzungszentren für die danach nachfolgende UV-Polymerisation der noch in der Haftklebemasse vorhandenen Restmonomeren und für die UV-Vernetzung der gesamten Haftklebemasse. Der eingesetzte polymerisationsfähige Fotoinitiator ist temperaturbeständig und, abgesehen von der radikalischen Spaltung der Doppelbindung, bleibt der photoaktivierbare Initiatorrest erhalten. Der photoaktive Rest wird unter UV-Strahlung aktiviert.

Aus der engen Palette der polymerisationsfähigen Fotoinitiatoren werden mit Erfolg 4(2-Acryloylethoxy)-phenyl-(2-hydroxy-2-propyl)-keton (bekannt als ZLI 3331/Ciba-Geigy) und 4-Acryloyloxybenzophenon eingesetzt.

Die Drehzahl der Schnecken läßt sich im Bereich 0 bis 350 U/min und die Temperatur der einzelnen Zonen zwischen Raumtemperatur und 250 °C einstellen. Die besten Ergebnisse, wobei der Umwandlungsgrad oberhalb von 85% lag, sind mit bis zu 40 U/min und 90-120 °C zu erreichen. Als besonders günstig haben sich ca. 15 U/min und ca. 100 °C in jeder einzelnen Zone erwiesen.

Das im Extruder hergestellte Prepolymer wird kontinuierlich z.B. durch eine Breitschlitzdüse auf eine dehäsiv eingestellte bahnförmige Unterlage aufgetragen und UV-Strahlen ausgesetzt. Als Unterlage sind alle Flächengebilde geeignet, deren Oberfläche das Ablösen der gebildeten Haftkleberschicht erlaubt. Bei der Wahl des Materials der vorzugsweise bahnförmigen Unterlage kann beispielsweise auf Polymere wie Polyethylen, Polypropylen, Polyester und Polyamide oder auf Papier zurückgegriffen werden, wenn ihre Oberflächen zum Beispiel durch Siliconisierung klebstoffabweisend eingestellt sind. Daneben kann die Unterlage aus Metallen oder textilen Flächengebilden bestehen. Ohne besondere Behandlung sind auch Polytetrafluoroethylen und Polyvinylchlorid geeignet.

Um das in die Polymerkette inkorporierte Fotoinitiatormolekül anzuregen, muß die UV-Quelle Strahlen im Wellenlängenbereich von dessen Hauptabsorptionsbanden abgeben. Dies kann mit üblichen Niederdruckstrahlern, Quecksilber-Mitteldruckstrahlern oder Lasern mit einer Leistung, die üblicherweise zwischen 10 bis 150 W/cm Lampenlänge beträgt, realisiert werden. Die Lampendimension richtet sich selbstverständlich nach der gewünschten Beschichtungsbreite.

Bei der UV-Bestrahlung bildet der photoaktive Fotoinitiatorrest Radikale, die die Rest-Polymerisation des Extrusionsprepolymers auf dem dehäsiven Träger initiieren. Je nach dem eingesetzten Typ des polymerisationsfähigen Fotoinitiators kann dieser durch Reaktion mit einer benachbarten Polymerkette eine Vernetzung bewirken.

## ABKÜRZUNGSVERZEICHNIS

| | |
|---|---|
| AS | - Acrylsäure |
| 2-EHA | - 2-Ethylhexylacrylat |
| BA | - Butylacrylat |

OA                - Octylacrylat
ZLI 3331        - 4(2-Acryloylethoxy)-phenyl-(2-hydroxy-2-propyl)-keton
ABP              - 4-Acryloyloxybenzophenon
Die Erfindung wird durch das folgende Beispiel erläutert:

Beispiel 1

Ein Monomerengemisch aus 18800 g 2-Ethylhexylacrylat, 1000 g Acrylsäure und 200 g eines polymerisationsfähigen Fotoinitiators 4(2-Acryloylethoxy)-phenyl-(2-hydroxy-2-propyl)-keton wird mit 12 g Radikalbildner AIBN abgemischt und mittels eines Doppelschneckenextruders der Fa. Leistritz kontinuierlich zu Haftprepolymer polymerisiert. Der Extruder ist mit sechs beheizbaren Zonen ausgestattet. Während der im Extruder durchgeführten Polymerisation wird die Schneckendrehzahl auf 15 U/min eingestellt und die Temperaturen der einzelnen Zonen konstant auf 100 °C gehalten. Das resultierende Prepolymerisat mit einer Viskosität von 25 Pa • s (gemessen bei RT) wird durch eine Breitschlitzdüse auf eine siliconisierte 80 μm dicke Polyesterfolie aufgetragen und mit einer UV-Lampe der Fa. IST (Typ U 350-M-1-DL, Leistung 3500 W) bestrahlt.
Folgende Parameter wurden eingehalten:

| Kleberauftrag (Klebstoffschichtdicke) | 1000 g/m$^2$ (0,95 mm) |
| Bestrahlungszeit | 60 sec |
| Abstand UV-Lampe/Klebschicht | 120 mm |
| Leistung der UV-Lampe | 120 W/cm |

Erhalten wurde nach der Bestrahlung eine 0,95 mm dicke Haftklebeschicht mit folgenden ermittelten Eigenschaften (Tabelle 1)

Tabelle 1

| Beispiel | Klebkraft auf Stahl bei 150 °C [N] | Reißfestigkeit [N] | Beständigkeit gegen Aceton[1] | Beständigkeit gegen Weichmacher[2] | Klebkraft auf.... [N] | | |
|---|---|---|---|---|---|---|---|
| | | | | | Stahl | PVC | PP |
| 1 | 10 | 7,0 | gut | gut | 28 | 18 | 8 |

Weitere Prüfungen der nach dem erfindungsgemäßen Verfahren hergestellten dicken Haftklebeschichten umfassen ebenfalls solche Prüfungen wie Klebkraft auf Stahl und anderen ausgewählten Substraten (nach AFERA 4001), Reißfestigkeit (nach DIN 53455), Lösemittel-Beständigkeit gegen Aceton und die Weichmacherbeständigkeit auf einer weichmacherhaltigen PVC-Leiste.
1. Beständigkeit gegen Aceton
Aus der Haftklebeschicht wird ein Muster (25 mm x 25 mm) ausgeschnitten und zwei Wochen bei Raumtemperatur in Aceton gelagert. Die Löslichkeit bzw. die Quellbarkeit des Haftklebefilms in Aceton wurde durch Änderung seiner Dicke optisch beurteilt.
2. Beständigkeit gegen Weichmacher
Aus der Haftklebeschicht wird ein 25 mm breiter Streifen ausgeschnitten und bei Raumtemperatur auf eine weichmacherhaltige PVC-Leiste aufgeklebt. Nach 7 Tagen werden die Streifen abgezogen und die Oberfläche der PVC-Leiste auf eventuelle Haftklebstoffrückstände optisch beurteilt.
Bei einer Ausgestaltung der Erfindung wird ein Kleberauftrag zwischen 200 g/m$^2$ und 3000 g/m$^2$ bei einer Klebstoffschichtdicke zwischen 0,18 mm und 2,8 mm aufgebracht. Die Polymerisation und Vernetzung durch UV-Bestrahlung wird vorteilhaft mit einer Bestrahlungszeit von 15 s bis 120 s vorgenommen.

Beispiele 2 bis 15

Analog Beispiel 1 werden nach den in der Tabelle 2 aufgeführten Angaben andere dicke Haftklebeschichten hergestellt.

Die Konzentration an AIBN wurde bei allen Versuchen konstant bei ca. 0,4 Gew.-% gehalten.

Außer der Zusammensetzung des Ausgangsgemisches wurde die Dicke der Haftklebeschicht und die Bestrahlungszeit variiert.

Die Eigenschaften der resultierenden dicken Haftklebeschichten wurden in der Tabelle 3 zusammengestellt.

**Tabelle 2**

| Beispiel | Zusammensetzung des Ausgangsgemisches [GT] | | | | | | Schnecken-drehzahl [U/min] | Temperatur des Extrusionsprepolymeren [°C] | Umwandlungsgrad [%] | Viskosität des Extrusionsprepolymeren (Pa·s) | Kleberauftrag [g/m²] | Bestrahlungszeit [s] | Gesamtumsatz [%] |
|---|---|---|---|---|---|---|---|---|---|---|---|---|---|
| | AS | 2-EHA | BA | OA | ZLI 3331 | ABP | | | | | | | |
| 2 | 8 | 92 | - | - | 3 | - | 15 | 100 | 88 | 17 | 1000 | 70 | 99,8 |
| 3 | 10 | - | 90 | - | 2 | - | 10 | 95 | 91 | 20 | 800 | 60 | 99,2 |
| 4 | 15 | 60 | 25 | - | 1,5 | - | 20 | 105 | 90 | 22 | 500 | 40 | 98,6 |
| 5 | 12 | - | - | 88 | - | 5 | 15 | 100 | 92 | 22 | 1200 | 100 | 98,7 |
| 6 | 10 | 70 | 20 | - | 5 | - | 30 | 110 | 86 | 10 | 300 | 50 | 99,0 |
| 7 | 20 | 40 | - | 40 | 2 | 3 | 10 | 100 | 93 | 25 | 1000 | 80 | 99,5 |
| 8 | 25 | - | 50 | 25 | 1 | 1 | 15 | 104 | 95 | 30 | 1200 | 120 | 99,0 |
| 9 | 6 | 94 | - | - | 2 | 4 | 14 | 101 | 87 | 18 | 650 | 70 | 98,8 |
| 10 | 15 | - | 85 | - | 6 | - | 12 | 100 | 93 | 24 | 400 | 20 | 99,0 |
| 11 | 4 | 56 | 20 | 20 | - | 6 | 18 | 110 | 88 | 16 | 700 | 60 | 99,2 |
| 12 | 7 | 13 | 80 | - | - | 7 | 15 | 103 | 90 | 20 | 800 | 90 | 99,6 |
| 13 | 10 | - | 80 | 10 | 2,5 | 2,5 | 15 | 102 | 93 | 23 | 900 | 100 | 99,5 |
| 14 | 9 | - | - | 91 | 2 | 2 | 20 | 105 | 86 | 19 | 800 | 60 | 98,7 |
| 15 | 16 | 64 | 20 | - | - | 4 | 15 | 100 | 92 | 23 | 1000 | 80 | 99,1 |

**Tabelle 3**

| Beispiel | Klebkraft auf Stahl bei 150°C [N] | Reißfestigkeit [N] | Beständigkeit gegen Aceton [1] | Beständigkeit gegen Weichmacher [2] | Klebkraft auf ... [N] | | |
|---|---|---|---|---|---|---|---|
| | | | | | Stahl | PVC | PP |
| 2 | 12 | 6,5 | gut | gut | 30 | 16 | 7 |
| 3 | 13 | 7,5 | gut | gut | 30 | 17 | 6,5 |
| 4 | 12 | 5,5 | gut | gut | 28 | 15,5 | 6 |
| 5 | 8 | 10 | gut | gut | 18 | 8,5 | 4,5 |
| 6 | 18 | 4,5 | gut | gut | 30 | 18 | 6,5 |
| 7 | 16 | 7 | gut | gut | 26 | 20 | 6 |
| 8 | 15 | 11 | gut | gut | 24 | 17,5 | 7 |
| 9 | 10,5 | 6 | gut | gut | 22,5 | 18,5 | 8 |
| 10 | 19 | 2,5 | gut | gut | 31 | 23 | 4,5 |
| 11 | 10 | 5,5 | gut | gut | 21 | 20 | 7,5 |
| 12 | 8,5 | 6,5 | gut | gut | 17 | 19 | 8 |
| 13 | 11 | 10 | gut | gut | 26 | 21,5 | 8 |
| 14 | 12 | 8 | gut | gut | 27,5 | 17 | 7,5 |
| 15 | 14,5 | 9,5 | gut | gut | 31 | 18 | 5,5 |

Als Ergebnis ist folgendes festzustellen:

Durch das Verfahren nach der vorliegenden Erfindung, wonach im Extruder hergestelltes Prepolymer auf einem dehäsiven Träger einer UV-Strahlung ausgesetzt wird, lassen sich problemlos dicke Haftklebeschichten herstellen. Sie zeichnen sich vorteilhaft durch gute thermische Resistenz, sehr gute mechanische Eigenschaften und hervorragende Adhäsion zu zahlreichen Substraten aus. Das Verfahren ist zudem wirtschaftlich günstig durchführbar.

**Patentansprüche**

1. Verfahren zur Herstellung von Haftkleberschichten, insbesondere von dicken Haftkleberschichten für selbstklebende Hochleistungsklebstoffartikel, dadurch gekennzeichnet, daß in einem Arbeitsschritt ein Gemisch von Ausgangsmonomeren, polymerisationsfähigem Fotoinitiator und Radikalbildner im Extruder kontinuierlich zu einem Prepolymerisat umgesetzt und daß in einem zweiten Arbeitsschritt das im Extruder hergestellte Prepolymerisat auf einen dehäsiv ausgerüsteten Träger aufgebracht und mittels UV-Bestrahlung zum fertigen Produkt durchpolymerisiert wird.

2. Verfahren nach Anspruch 1, dadurch gekennzeichnet, daß das im Extruder hergestellte Prepolymerisat auf eine Viskosität eingestellt wird, die eine Beschichtung auf einem dehäsiv ausgerüsteten Träger ermöglicht.

3. Verfahren nach Anspruch 1, dadurch gekennzeichnet, daß das Monomerengemisch Acrylsäure und/oder Acrylsäurederivate enthält.

4. Verfahren nach Anspruch 2, dadurch gekennzeichnet, daß das Monomerengemisch 2-Ethylhexylacrylat enthält.

5. Verfahren nach Anspruch 4, dadurch gekennzeichnet, daß als Fotoinitiator 4(2-Acryloylethoxy)-phenyl-(2-hydroxy-2-propyl)-keton oder 4-Acryloyloxybenzophenon eingesetzt wird.

6. Verfahren nach einem oder mehreren der vorangehenden Ansprüche, dadurch gekennzeichnet, daß die Herstellung der Haftklebemasse in einem Doppelschneckenextruder durchgeführt wird.

7. Verfahren nach Anspruch 1, dadurch gekennzeichnet, daß ein Haftklebstoffauftrag zwischen 200 g/m$^2$ und 3000 g/m$^2$ bei einer Haftklebstoffschichtdicke zwischen 0,18 mm und 2,8 mm aufgebracht wird.

8. Verfahren nach Anspruch 1, dadurch gekennzeichnet, daß die UV-Polymerisation mit einer Bestrahlungszeit zwischen 15 und 120 sec. vorgenommen wird.

9. Verfahren nach Anspruch 1, dadurch gekennzeichnet, daß als UV-Quelle eine UV-Lampe oder ein Laser verwendet wird.

**Fig. 1**

Carboxylgruppenhaltiges
Polymerisat
+
strahlenpolymerisierbares
olefinisch ungesättigtes
Monomerengemisch
+
Fotoinitiator
+
(thermisch reagierender)
Vernetzer

Mischer

UV
Quelle

Dicke
Haftklebeschicht

Verfahren
gemäß
DE 39 35 097

**Fig. 2**

Monomerengemisch
+
Fotoinitiator
+
gesättigtes
photopolymersationsfähiges Polymerisat
+
(polymersationsfähiger
Fotoinitiator)

Mischer

UV
Quelle

Dicke
Haftklebeschicht

Verfahren
gemäß
P 43 03 183.8

**Fig. 3**

Monomerengemisch
+
polymerisationsfähiger
Fotoinitiator
+
Radikalbildner (AIBN)

Extruder

UV
Quelle

Dicke
Haftklebeschicht

Verfahren
gemäß
vorliegender
Erfindung